# EUROPEAN PATENT APPLICATION

(11) **EP 4 617 181 A1**
(43) Date of publication of application: **17.09.2025**
(21) Application number: 23888920.8
(22) Date of filing: 25.09.2023
(51) Int. Cl.: B65B 35/56, B65B 35/44, B65G 47/28, B65G 17/06, B65G 39/02

(54) **PILL ARRANGEMENT SUPPLY DEVICE**

(30) Priority: 08.11.2022 KR 20220147788
(71) Applicant: Kim, Jin Ki, Incheon 22535 (KR); Park, Jong Kil, Incheon 21679 (KR)
(72) Inventor: Kim, Jin Ki, Incheon 22535 (KR); Park, Jong Kil, Incheon 21679 (KR)
(74) Representative: Noréns Patentbyrå AB
(86) International application number: PCT/KR2023/014621
(87) International publication number: WO 2024/101656

(57) **Abstract**

The present disclosure relates to a pill arrangement supply device which arranges and transfers pills for packaging a pill or testing the quality of a pill in a pill production line of a tablet or capsule medicine, etc. and, more particularly, to a pill arrangement supply device in which a pill seated in an arrangement groove of a roller is stably transferred without escaping from the arrangement groove. A pill arrangement supply device according to the present disclosure includes: multiple rollers which are sequentially arranged and have arrangement grooves to seat a pill on a surface thereof; a circulation member for circulating the rollers; a brush provided on the upper part of the roller and guiding a pill to an arrangement groove; and an inverse-rotating means provided at an arrangement section at which the brush is located, to cause the roller to rotate in a direction inverse to the direction in which the rollers circularly transfer.

## Description

### Technical Field

The present disclosure relates to a pill arrangement supply device that aligns and conveys pills for quality inspection or packaging pills on a pill production line, such as tablets or capsules. More specifically, the present disclosure relates to a pill arrangement supply device that stably conveys a pill seated in an arrangement groove of a roller without removal from the arrangement groove.

### Background Art

There are many types of medications manufactured by pharmaceutical companies, and medications can be broadly categorized into liquid medicine, granules, tablets, or capsules (soft capsules) by their formulation.

At this point, pills such as tablets or capsules are immediately inspected individually by the production process, and defective pills produced in production are immediately recovered and reproduced or destroyed. Then, good pills are packaged.

The pill arrangement supply device aligns and conveys pills for inspection and packaging of pills.

In Korean Patent No. 10-2310235 "Vision inspection apparatus for tablet", the apparatus places pills in seating portions of circularly moved rollers and aligns and conveys the pills.

Korean Patent No. 10-2310235 "Vision inspection apparatus for tablet" is provided without a separate means that guides pills supplied onto the rollers to be seated in the seating portion, and pills placed in positions, not the seating portion, empty seating portions without pills, pills duplicated and placed in one seating portion, and the like may occur. These situations reduce the accuracy of pill quality inspection and slow down the speed of pill quality inspection or packaging.

### Disclosure

### Technical Problem

Accordingly, the present disclosure has been made keeping in mind the above problems occurring in the related art, and an objective of the present disclosure is to provide a pill arrangement supply device including a means capable of seating and aligning pills in arrangement grooves of rollers one by one and preventing pills from being removed from the arrangement grooves.

### Technical Solution

The present disclosure is provided to solve the above-described problems of the related art, and an objective of the present disclosure is to provide a pill arrangement supply device, which includes:
multiple rollers sequentially arranged and having arrangement grooves on which a pill is seated on each surface thereof;
a circulation member for moving the rollers circularly;
a brush provided on an upper portion of the rollers and guiding the pill to an arrangement groove of each roller; and
an inverse-rotating means provided within an arrangement section at which the brush is located, to cause the rollers to be rotated in a direction inverse to a circular moving direction.

Furthermore, the inverse-rotating means may be a pressure pad for pressing a surface of each roller, and
the inverse-rotating means may be a close contact-circulation belt, which is moved circularly at a speed faster than a circular moving speed of the circulation member while being brought into close contact with the surface of each roller.

### Advantageous Effects

According to the present disclosure, the pill arrangement supply device is configured, with the brush, to remove one of two duplicated pills seated in one arrangement groove from the arrangement groove when guiding the pills to be seated in the arrangement grooves of the rollers, and to prevent a pill seated in the arrangement groove from being removed from the arrangement groove in the process of seating one pill in one arrangement groove, thereby improving accuracy and speed of quality inspection and packaging of pills, and therefore the pill arrangement supply device is a very useful invention for industrial development.

### Description of Drawings

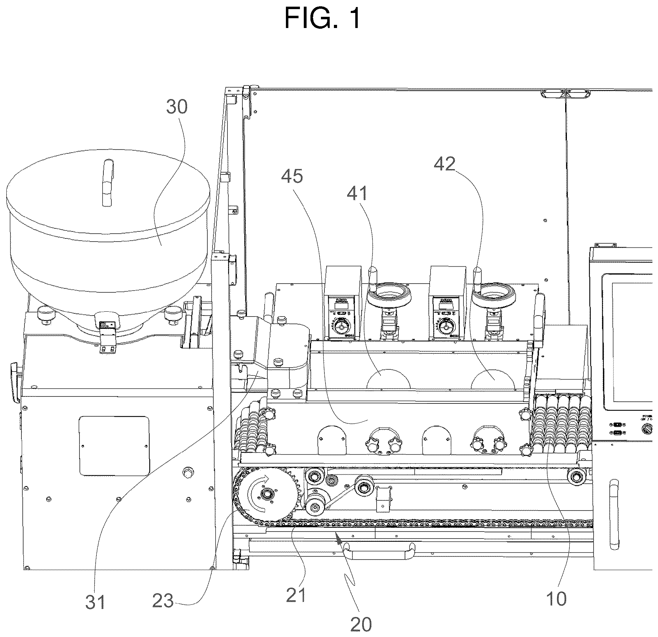

FIG. 1 is a front view showing a pill arrangement supply device according to the present disclosure.

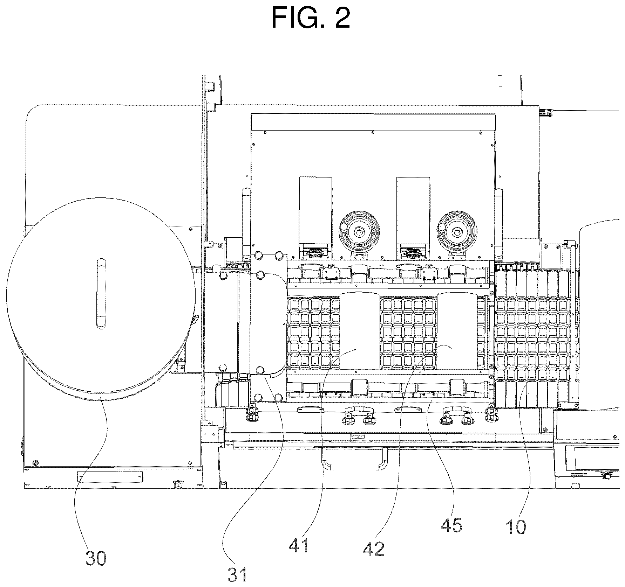

FIG. 2 is a plan view showing the pill arrangement supply device according to the present disclosure.
FIG. 3 is a perspective view showing rollers according to the present disclosure.

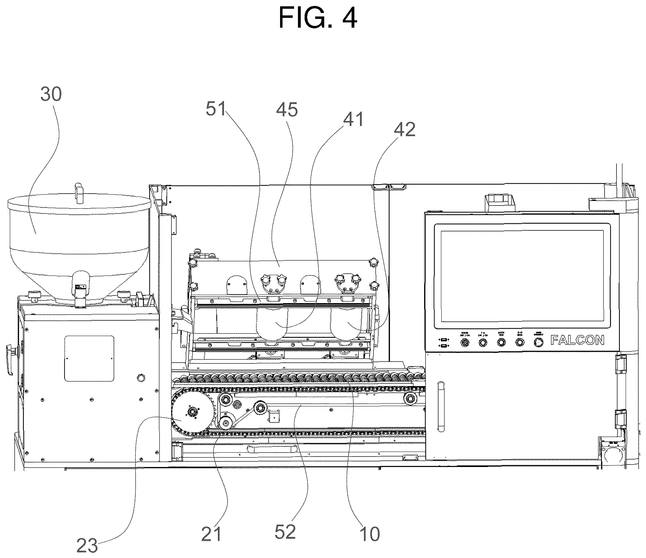

FIG. 4 is a view showing a pressure pad and a close contact-circulation belt for an inverse-rotating means according to the present disclosure.
FIG. 5 is a view illustrating an inverse rotation of the rollers by the pressure pad.
FIG. 6 is a view illustrating an inverse rotation of the rollers by the close contact-circulation belt.

### *Description of reference numerals*

10: roller 11: shaft protrusion
13: arrangement groove 15: pressure portion
20: circulation member 21: chain
23: gear 30: supply hopper
41: first brush 42: second brush
51: pressure pad 52: close contact-circulation belt

### Best Mode

Hereinbelow, a pill arrangement supply device according to the present disclosure will be described in detail with reference to accompanying drawings.

As shown in the drawings, according to the present disclosure, the pill arrangement supply device includes multiple rollers 10, a circulation member 20, a supply hopper 30, a brush 41, 42, and an inverse-rotating means 51, 52.

The multiple rollers 10 are sequentially arranged and moved in a circular way.

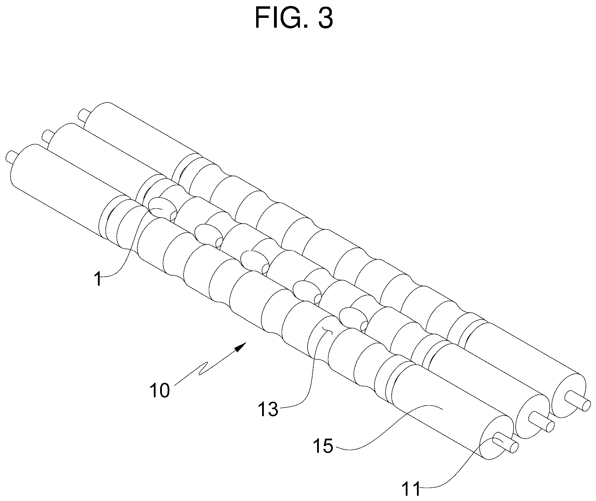

Referring to FIG. 3, shaft protrusions 11 are formed on opposite ends of each roller 10 and rotatably coupled to the circulation member 20, arrangement grooves 13 on which pills 1 are seated are formed at a middle portion thereof, and a pressure portion 15 is formed at an edge thereof and is pressed by a pressure pad 51 or a close contact-circulation belt 52 of the inverse-rotating means 51, 52.

A pill 1 is seated in each arrangement groove 13 between two rollers 10 and conveyed. Then, in the circular movement process, the rollers 10 are rotated on the shaft protrusions 11 as a shaft and rotate the pills 1 seated in the arrangement grooves 13 360 degrees. Thereafter, quality inspection of the entire surface of the pills 1 is performed. For reference, the quality inspection for the pills 1 is performed by inspecting for bubbles, shapes, sizes, letters, foreign substances, and the like.

The circulation member 20 moves the rollers 10 circularly.

The circulation member 20 may consist of a chain 21 or a timing belt, gears 23 engaged with opposite portions of the chain 21 or the timing belt, and a motor rotating the gears 23.

The supply hopper 30 supplies the pills 1 to an upper portion of the roller 10 moved circularly.

An outlet 31 is connected to the supply hopper 30 to discharge the pills 1 to the upper portion of the rollers 10, and a regulator may be provided at a lower portion of the supply hopper 30 to regulate the number of the pills 1.

The brush 41, 42 is provided at the upper portion of the rollers 10 moved circularly so as to guide the pills 1 to be seated in the arrangement grooves 13 of the rollers 10, and removes all but one of several duplicate pills 1 seated in the arrangement grooves 13.

The brush 41, 42 may include a first brush 41 arranged on a front portion of the rollers 10 moved circularly, and a second brush 42 arranged on a rear portion thereof.

The first brush 41 and the second brush 42 are coupled to a quadrilateral frame 45 in which upper and lower portions are open.

The first brush 41 and the second brush 42 may be securely coupled to the quadrilateral frame 45 or rotatably coupled thereto.

When the first brush 41 and the second brush 42 are rotatably coupled to the quadrilateral frame 45, it is preferable that the first brush 41 and the second brush 42 are rotated by the motor in a direction inverse to a circular moving direction of the rollers 10.

An end portion of the first brush 41 is spaced from a surface of each roller 10 at a first gap.

At this point, the first gap is smaller than the thickness of each pill 1.

Pills 1 placed on the surfaces of the rollers 10, not the arrangement grooves 13 are blocked by the first brush 41 and do not pass, and the pills 1 blocked by the first brush 41 are moved sideways and seated in the arrangement grooves 13 of the rollers 10.

An end portion of the second brush 42 is brought into contact with the surfaces of the rollers 10 or spaced from the surface at a second gap.

At this point, the second gap is smaller than the first gap.

When two or more pills 1 are seated in one arrangement groove 13, a portion of another pill 1 (duplicate pill) is placed on a pill 1(center pill) seated in a central deep portion of the arrangement groove 13 between two rollers 10, and thus the duplicate pill protrudes higher than the center pill.

The second brush 42 blocks and removes the higher protruding duplicate pill from the arrangement groove 13.

The inverse-rotating means 51, 52 rotates the rollers 10 in the direction inverse to the circular moving direction in an arrangement section in which the brush 41, 42 is located, preventing the pills 1 from being removed from the arrangement grooves 13. Specifically, in the process in which the second brush 42 removes the duplicate pills 1, the inverse-rotating means 51, 52 prevents the center pills 1 from being removed from the arrangement grooves 13.

Since the duplicate pill 1 is in contact with the center pill 1, an impact caused in the process by the second brush 42 removing the duplicate pill 1 from the arrangement groove 13 is transmitted to the center pill 1, and the center pill 1 may be separated and removed from the arrangement groove 13.

When the rollers 10 are rotated in the direction inverse to the circular moving direction, the arrangement grooves 13 of the rollers 10 restrict the pills 1 forcibly to prevent the pills from being separated and removed from the arrangement grooves 13.

The inverse-rotating means 51, 52 may use the pressure pad 51 or the close contact-circulation belt 52.

The pressure pad 51 is provided at a lower portion of the quadrilateral frame 45 and presses the surface of the pressure portion 15 located at each edge of the rollers 10.

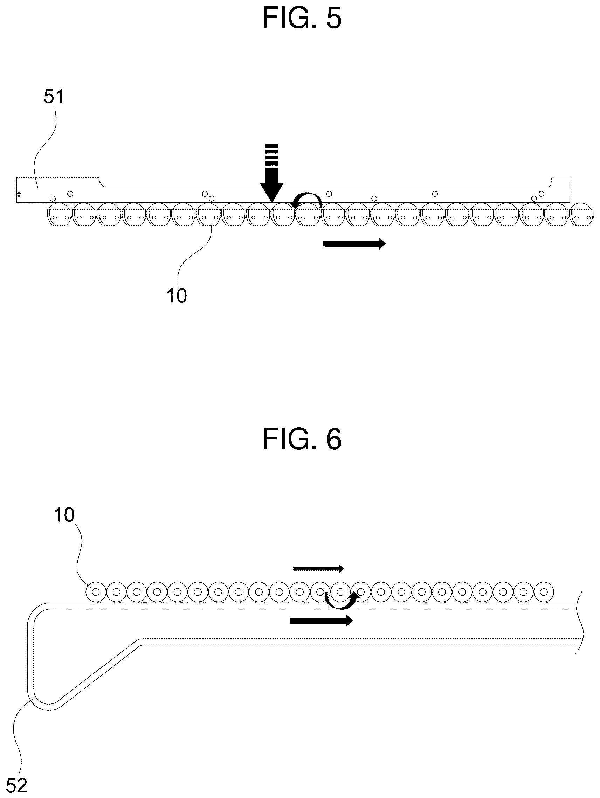

Referring to FIG. 5, when the pressure pad 51 presses each upper surface of the rollers 10, the rollers 10 are rotated in the direction inverse to the circular moving direction.

The close contact-circulation belt 52 is provided inside the rollers 10 and moved circularly in close contact with the surface of the pressure portion 15 formed on each edge of the rollers 10.

Referring to FIG. 6, the close contact-circulation belt 52 is moved circularly in a direction equal to the circular moving direction of the rollers 10. The circular moving speed of the close contact-circulation belt 52 is faster than the circular moving speed of the rollers 10, and the rollers 10 with the lower surface being in close contact with the close contact-circulation belt 52 are rotated in the direction inverse to the circular moving direction.

In the above description, although the pill arrangement supply device having specific shapes and configurations has been described for illustrative purposes with reference to the accompanying drawings, those skilled in the art will appreciate that various modifications, additions, and substitutions are possible, and such modifications, additions, and substitutions are to be interpreted as belonging to the scope of the present disclosure.

## Claims

1. A pill arrangement supply device comprising:
multiple rollers sequentially arranged and having arrangement grooves on which a pill is seated on each surface thereof;
a circulation member for moving the rollers circularly;
a brush provided on an upper portion of the rollers and guiding the pill to an arrangement groove of each roller; and
an inverse-rotating means provided within an arrangement section at which the brush is located, to cause the rollers to be rotated in a direction inverse to a circular moving direction.

2. The pill arrangement supply device of claim 1, wherein the inverse-rotating means is a pressure pad for pressing a surface of each roller.

3. The pill arrangement supply device of claim 1, wherein the inverse-rotating means is a close contact-circulation belt, which is moved circularly at a speed faster than a circular moving speed of the circulation member while being brought into close contact with the surface of each roller.
